# FASCICULE DE BREVET EUROPEEN

(11) **EP 1 827 906 B1**
(45) Date de publication et mention de la délivrance du brevet: **23.02.2011**
(21) Numéro de dépôt: 05850607.2
(22) Date de dépôt: 23.12.2005
(51) Int. Cl.: B60Q 1/04, F21V 17/00

(54) **BLOC OPTIQUE DE VEHICULE COMPRENANT UNE PARTIE STRUCTURELLE ET TRAVERSE DE VEHICULE**
OPTISCHE EINHEIT EINES FAHRZEUGS MIT STRUKTURELLEM TEIL UND FAHRZEUGS-QUERSTREBE
VEHICLE OPTICAL UNIT COMPRISING A STRUCTURAL PART AND VEHICLE CROSS-MEMBER

(30) Priorité: 24.12.2004 FR 0413928
(43) Date de publication de la demande: 05.09.2007
(73) Titulaire: COMPAGNIE PLASTIC OMNIUM, 69007 Lyon (FR)
(72) Inventeur: FAYT, Arnold, F-01640 Jujurieux (FR)
(74) Mandataire: Remy, Vincent Noel Paul
(86) Numéro de dépôt international: PCT/FR2005/003270
(87) Numéro de publication internationale: WO 2006/070133

(56) Documents cités:
- EP-A- 1 352 811
- FR-A- 2 576 575
- FR-A- 2 625 164
- FR-A- 2 685 265
- FR-A- 2 788 837
- FR-A- 2 818 605
- FR-A- 2 820 706
- US-A- 5 331 521
- PATENT ABSTRACTS OF JAPAN vol. 008, no. 073 (M-287), 5 avril 1984 (1984-04-05) & JP 58 218440 A (NISSAN JIDOSHA KK), 19 décembre 1983 (1983-12-19)

## Description

### Domaine technique

La présente invention concerne des blocs avant de carrosserie de véhicules automobiles.

### Etat de la technique

La demanderesse a déjà décrit, dans EP 1 352 811, une structure de bloc avant de véhicule automobile divisée en deux modules, à savoir d'une part un module structurel, comportant notamment une traverse supérieure s'étendant sur toute la largeur du véhicule et supportant différents organes fonctionnels, d'autre part un module géométrique supportant les éléments visibles de l'avant du véhicule, tels que des pièces de carrosserie et des optiques.

Un des avantages d'un tel découpage est que tous les éléments visibles de l'avant du véhicule forment un ensemble d'un seul tenant, qui peut être rapporté sur le véhicule en une fois et dans lequel les jeux et affleurements ont été préalablement réglés, indépendamment des défauts géométriques de la structure du véhicule.

La présence, à l'avant du véhicule, des blocs optiques et de la traverse supérieure du module structurel pose des problèmes d'encombrement, car les blocs optiques ont tendance à devenir de plus en plus volumineux et la place disponible, en particulier dans les directions X (longitudinale) et Z (verticale) diminue d'autant. Le document FR2625164 décrit un bloc avant dans lequel la traverse est de taille réduite, mais pour lequel la mise en référence du bloc optique par rapport aux pièces de carrosserie environnantes reste festidieuse. **Problème posé par cet état de la technique**

Il existe donc un besoin pour une solution dans laquelle l'ensemble formé par le bloc optique et la traverse supérieure serait de taille plus réduite, mais où le boîtier d'optique pourrait toujours être positionné de manière que son vitrage demeure correctement mis en référence par rapport aux pièces de carrosserie environnantes, notamment celles portées par le module géométrique.

### Solution proposée par l'invention

L'invention propose une solution qui résout le problème exposé ci-dessus et dans laquelle le boîtier d'optique offre toujours une bonne gestion des jeux et affleurements entre les éléments visibles de l'avant du véhicule.

La présente invention a pour objet l'ensemble d'un bloc optique de véhicule automobile, et d'une traverse appartenant à la structure du véhicule selon la revendication 1.

Ainsi, la partie structurelle du boîtier d'optique prolonge la traverse du véhicule, par exemple la traverse supérieure d'une face avant technique, si bien qu'il n'est plus nécessaire que le module structurel du véhicule s'étende sur toute sa largeur pour supporter les blocs optiques. En d'autres termes, les blocs optiques sont fixés en porte-à-faux par rapport à la traverse supérieure, on peut les qualifier de blocs optiques autoportants. La traverse supérieure peut donc s'arrêter aux deux blocs optiques, sans s'étendre jusqu'aux supports d'aile.

Dans un mode de réalisation particulier, la liaison est déformable, de manière à pouvoir se déformer pour suivre les déplacements relatifs se produisant entre le module géométrique et le boîtier d'optique lors du montage du boîtier d'optique sur la structure du véhicule et lors de l'utilisation du véhicule.

Grâce à l'aptitude à la déformation de la liaison prévue entre le vitrage d'optique et le boîtier d'optique, il est possible de conserver des jeux et affleurements optimisés entre le vitrage d'optique, seule partie visible du bloc optique, et les pièces de carrosserie qui l'environnent, même après fixation du boîtier d'optique sur la structure du véhicule.

Enfin, grâce à la relative résistance de la liaison entre le vitrage d'optique et le boîtier d'optique correspondant, les blocs optiques sont maintenus par les vitrages fixés au module géométrique le temps que ce dernier soit rapporté sur le véhicule. Et lors de ce montage global de l'avant du véhicule, chaque bloc optique est fixé par sa partie structurelle à la structure du véhicule. A cette occasion, la liaison déformable se déforme et elle continuera de se déformer lors de l'utilisation du véhicule, en s'adaptant aux déplacements relatifs entre le module géométrique et la structure du véhicule (et ce d'autant plus que les boîtiers d'optique sont autoportants), mais les jeux et affleurements entre le vitrage d'optique et les pièces de carrosserie qui l'environnent sont maintenus à des valeurs très faibles, obtenues grâce au découpage connu de l'avant du véhicule en un module géométrique et un module structurel.

Dans un mode de réalisation particulier, la liaison est étanche et assure la fermeture étanche du boîtier vis-à-vis de l'extérieur du véhicule.

Un autre avantage procuré par l'invention est de rendre plus aisé le remplacement des ampoules, car, dans l'état de la technique, la présence de la traverse derrière le bloc optique gène l'accès à l'intérieur de ce dernier. Cet accès devient libre dans l'invention, du fait de la suppression de la traverse derrière le bloc optique.

De plus, dans la direction verticale (Z), il est avantageux de disposer d'une course accrue pour le choc d'une tête de piéton, afin de mieux absorber l'énergie d'un tel choc. L'invention procure également cet avantage.

Encore un autre avantage de l'invention est que la suppression des bras latéraux sur la face avant technique permet d'envisager un montage selon une direction inhabituelle, par exemple par translation et légère rotation selon un mouvement de bas en haut, le passage des blocs optiques n'étant plus gêné par la traverse supérieure de la face avant technique.

### Modes de réalisation particuliers

Selon différents modes de réalisation de l'invention, qui peuvent être pris seul ou en combinaison :
- la liaison déformable entre le vitrage et le boîtier est constituée par un joint de colle souple qui autorise un déplacement relatif entre le vitrage et le boîtier sans perte d'étanchéité,
- la partie structurelle du boîtier d'optique est constituée par un réseau de nervures,
- la partie structurelle du boîtier d'optique est dimensionnée de manière à ce que deux boîtiers constituent, avec la structure de part et d'autre de laquelle lesdits boîtiers sont fixés, un ensemble dont l'inertie est suffisante pour que la rigidité de la caisse du véhicule, entre les deux ailes avant, soit préservée,
- la liaison déformable comprend des pattes de maintien entre le vitrage et le boîtier, ces pattes étant destinées à être rompues après fixation du boîtier sur la structure du véhicule.

### Description d'un exemple

Afin de mieux faire comprendre l'invention, on va en décrire maintenant un mode de réalisation donné à titre d'exemple non limitatif de la portée de l'invention, en référence aux dessins annexés dans lesquels :
- la figure 1 est une vue en perspective d'une face avant technique apte à recevoir un boîtier d'optique selon l'invention,
- la figure 2 est une section d'un boîtier d'optique selon l'invention et de son environnement,
- la figure 3 est une vue en perspective éclatée d'un avant constitué par deux optiques et une peau de bouclier d'une part, une face avant technique d'autre part.

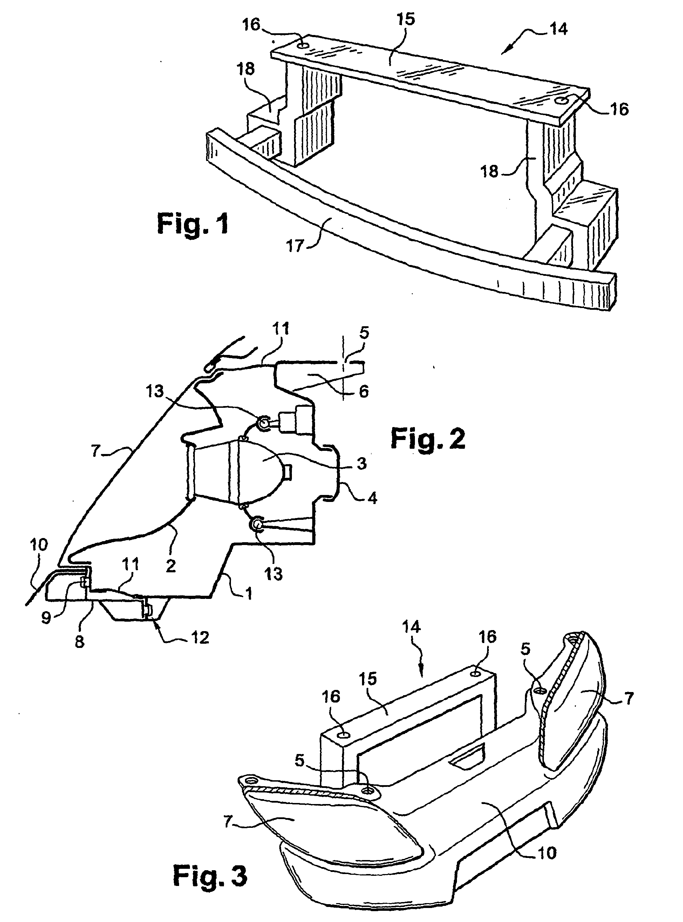

Un bloc avant comportant un boîtier optique selon l'invention est composé d'un module structurel représenté sur la figure 1, et d'un module géométrique, visible sur la figure 3.

Le bloc optique, visible sur la figure 2, est composé d'un boîtier 1 et d'un vitrage 7. Le boîtier d'optique 1 comprend un cuvelage réfléchissant 2, un projecteur 3 et un obturateur 4. Le boîtier 1 comporte en outre des moyens de fixation à la structure du véhicule, constitués d'orifices 5 de passage d'une vis.

Ces moyens de fixation 5 sont agencés sur une partie structurelle du boîtier comprenant un réseau de nervures de renfort 6. Le réseau de nervures 6 s'étend le long du bord supérieur du boîtier. Il est dimensionné de manière que, si deux boîtiers sont montés sur une face avant technique de part et d'autre de celle-ci, on obtient un ensemble dont l'inertie est suffisante pour que la rigidité de la caisse du véhicule, entre ses deux ailes avant, soit préservée, c'est-à-dire que l'on retrouve la même inertie que si la face avant technique comportait des bras allant jusqu'aux ailes. Le vitrage 7 du bloc optique est muni d'un moyen de fixation au module géométrique du véhicule.

Ce module géométrique est composé d'éléments de carrosserie visibles à l'avant du véhicule, à savoir une peau de pare-chocs 10, et d'une armature 8 supportant la peau 10 et le vitrage 7. Les moyens de fixation du vitrage au module géométrique, plus précisément à l'armature 8, sont composés de plusieurs doigts 8 d'encliquetage assurant la fixation du vitrage sur l'armature, ces doigts étant issus de moulage avec le vitrage. Les moyens de fixation de la peau sur l'armature ne sont pas représentés.

Enfin le bloc optique comporte une liaison entre le boîtier 1 et le vitrage 7, suffisamment résistante pour que le vitrage 7, fixé à l'armature 8, puisse supporter le boîtier 1 tant qu'il n'est pas encore monté sur la structure du véhicule. Cette liaison comprend une chemise en élastomère 11, un point 12 de fixation avec jeu entre le vitrage 7 et le boîtier 1, et une rotule 13 permettant le réglage d'orientation du projecteur. La chemise peut avoir une forme de soufflet ou être constituée par un cordon de colle ou un joint souple. Cette liaison est étanche et déformable, de manière à pouvoir se déformer pour suivre les déplacements relatifs se produisant entre le module géométrique 8 et le boîtier 1 lors du montage du boîtier sur le module structurel 14 du véhicule et lors de l'utilisation du véhicule.

Le point 12 de fixation avec jeu renforce la liaison provisoire entre vitrage et boîtier tant que le boîtier n'est pas fixé à la structure. Mais ce jeu est suffisant pour autoriser tant le positionnement correct du vitrage par rapport au boîtier que les déplacements relatifs se produisant entre le boîtier et l'armature (donc le bouclier) lors de l'utilisation du véhicule (vibrations au roulage, ensoleillement/chauffage, fatigue...).

Le module structurel du véhicule est composé d'une face avant technique 14 comportant une traverse supérieure 15, deux points 16 de fixation du boîtier 1 sur la traverse 15, et une traverse de chocs Danner. Cette traverse Danner s'étend d'un jambage à l'autre en s'appuyant (indirectement) sur les longerons (non représentés) du véhicule.

Une vis (non représentée) traverse l'orifice de passage 5 et pénètre dans le point de fixation 16 prévu sur la traverse 15. Elle assure la fixation du boîtier sur la structure du véhicule lors du montage sur le véhicule de l'avant constitué par l'armature, la peau de bouclier et les optiques.

Comme on peut le constater, la face avant technique est moins encombrante qu'à l'habitude du fait qu'elle ne comporte pas de bras latéraux pour le support des optiques. La largeur de la face avant technique est donc sensiblement égale à la distance entre les deux longerons (non représentés) du véhicule.

Il est bien entendu que le mode de réalisation décrit ci-dessus ne présente aucun caractère limitatif et qu'il pourra recevoir toutes modifications désirables dans le cadre es revendications annexées.

## Revendications

1. Ensemble d'un bloc optique de véhicule automobile et d'une traverse appartenant à la structure (14) du véhicule,
le bloc optique comprenant un boîtier d'optique (1) comprenant une partie structurelle munie de moyens de fixation à
l'extrémité de la traverse,
la partie structurelle pouvant être fixée dans le prolongement de la traverse, de façon à se trouver en porte-à-faux par rapport à la traverse et prolongeant celle-ci si bien qu'il n'est pas nécessaire que la traverse s'étende sur toute la largeur du véhicule, jusqu'à des supports d'aile, pour supporter le blocs optique,
la partie structurelle étant suffisamment résistante pour porter le boîtier d'optique lors de l'utilisation du véhicule,
**caractérisé en ce que** le bloc optique comporte:
- un vitrage (7) muni de moyens de fixation (9) à un module géométrique (8) qui est destiné à supporter des éléments visibles (10) à l'avant du véhicule,
- une liaison (11) entre le boîtier d'optique (1) et le vitrage (7), cette liaison étant suffisamment résistante pour que le vitrage, lorsqu'il est fixé au module géométrique, puisse supporter le boîtier d'optique tant que ce dernier n'est pas encore monté sur la structure du véhicule.

2. Ensemble selon la revendication 1, dans lequel la liaison (11) est déformable, de manière à pouvoir se déformer pour suivre les déplacements relatifs se produisant entre le module géométrique (8) et le boîtier d'optique (1) lors du montage du boîtier d'optique sur la structure (14) du véhicule et lors de l'utilisation du véhicule.

3. Ensemble selon l'une des revendications 1 et 2, dans lequel la liaison (11) est étanche.

4. Ensemble selon la revendication 3, dans lequel la liaison entre le vitrage et le boîtier est constituée par un joint de colle souple.

5. Ensemble selon l'une des revendications 1 à 4, dans lequel la partie structurelle (6) du boîtier d'optique est constituée par un réseau de nervures.

6. Ensemble selon l'une des revendications 1 à 5, dans lequel la partie structurelle (6) du boîtier d'optique est dimensionnée de manière à ce que deux boîtiers constituent, avec la structure (14) de part et d'autre de laquelle lesdits boîtiers sont fixés, un ensemble dont l'inertie est suffisante pour que la rigidité de la caisse du véhicule, entre ses deux ailes avant, soit préservée.

7. Ensemble selon l'une des revendications 1 à 6, dans lequel la liaison déformable comprend des pattes de maintien entre le vitrage et le boîtier, ces pattes étant destinées à être rompues après fixation du boîtier sur la structure du véhicule.

## Claims

1. Assembly of a motor vehicle headlamp unit and a crosspiece that is part of the structure (14) of the vehicle, the headlamp unit comprising a headlamp unit casing (1) comprising a structural portion (6) provided with fastener means (5) for fastening to the end of the crosspiece, the structural portion (6) being fastened so that it extends the crosspiece outwards, so as to be cantilevered out relative to the crosspiece and extending it outwards, so it is not necessary for the crosspiece to extend over the entire width of the vehicle, up to the fender supports, to support the headlamp unit, the structural portion (6) being strong enough to carry the headlamp unit casing (1) while the vehicle is being used, **characterized in that** the headlamp unit includes:
- a headlamp glass (7) provided with fastener means (9) for fastening to a geometrical module (8) which is designed to support visible elements (10) at the front of the vehicle; and
- a link (11) between the headlamp unit casing (1) and the glass (7), said link being strong enough for the glass, while being fastened to the geometrical module, to support the headlamp unit casing so long as said headlamp unit casing is not yet mounted on the structure of the vehicle.

2. Assembly according to claim 1, in which the link is deformable (11), so that it can deform to accommodate the relative movements that take place between the geometrical module (8) and the headlamp unit casing (1) while the headlamp unit casing is being mounted on the structure (14) of the vehicle, and while the vehicle is being used.

3. Assembly according to claim 1, in which the link (11) is weatherproof.

4. Assembly according to claim 3, in which the link between the glass and the casing is constituted by a seal of flexible adhesive.

5. Assembly according to claim 1, in which the structural portion is constituted by an array of ribs.

6. Assembly according to claim 1, in which the structural portion (6) of the headlamp unit casing is dimensioned so that two casings and the structure (14) on either side of which said casings are fastened constitute an assembly whose inertia is sufficient for the rigidity of the body of the vehicle to be preserved between its two front fenders.

7. Assembly according to claim 1, in which the deformable link is provided with holding tabs for holding the glass and the casing together, said tabs being designed to break once the casing is fastened to the structure of the vehicle.

## Patentansprüche

1. Anordnung einer optischen Einheit eines Kraftfahrzeugs und einer zur Struktur (14) des Fahrzeugs gehörenden Querstrebe, wobei die optische Einheit einen optischen Gehäuse mit einem strukturellen Teil aufweist, der mit Mitteln zur Befestigung am Ende der Querstrebe ausgestattet ist,
wobei der strukturelle Teil in der Verlängerung der Querstrebe befestigt werden kann, derart, dass er bezüglich der Querstrebe überkragend angeordnet ist und diese verlängert, so dass es nicht erforderlich ist, dass die Querstrebe sich über die gesamte Breite des Fahrzeugs bis zu den Kotflügelbänken erstreckt, um die optische Einheit zu halten,
wobei der strukturelle Teil ausreichend fest ist, um das optische Gehäuse während der Benutzung des Fahrzeugs zu tragen,
**dadurch gekennzeichnet, dass** die optische Einheit aufweist:
- eine Verglasung (7), die mit Mitteln zur Befestigung (9) an einem geometrischen Modul (8) ausgestattet ist, welches dazu bestimmt ist, sichtbare Elemente (10) an der Vorderseite des Fahrzeugs zu halten,
- eine Verbindung (11) zwischen dem optischen Gehäuse (1) und der Verglasung (7), wobei diese Verbindung ausreichend fest ist, damit die Verglasung, wenn sie an dem geometrischen Modul befestigt ist, das optische Gehäuse halten kann, solange dieses Letztere noch nicht an der Struktur des Fahrzeugs angebracht ist.

2. Anordnung nach Anspruch 1, wobei die Verbindung (11) verformbar ist, derart, dass sie sich verformen kann, um den relativen Verschiebungen zu folgen, die zwischen dem geometrischen Modul (8) und dem optischen Gehäuse (1) während der Montage des optischen Gehäuses an der Struktur (14) des Fahrzeugs und während der Benutzung des Fahrzeugs erfolgen.

3. Anordnung nach einem der Ansprüche 1 und 2, wobei die Verbindung (11) dicht ist.

4. Anordnung nach Anspruch 3, wobei die Verbindung zwischen der Verglasung und dem Gehäuse aus einer flexiblen Klebefuge besteht.

5. Anordnung nach einem der Ansprüche 1 bis 4, wobei der strukturelle Teil (6) des optischen Gehäuses aus einem Gitter von Rippen besteht.

6. Anordnung nach einem der Ansprüche 1 bis 5, wobei der strukturelle Teil (6) des optischen Gehäuses derart bemessen ist, dass zwei Gehäuse mit der Struktur (14), beiderseits welcher diese Gehäuse befestigt sind, eine Anordnung bilden, deren Trägheit ausreichend dafür ist, dass die Steifigkeit der Karosserie des Fahrzeugs zwischen seinen zwei vorderen Kotflügeln erhalten bleibt.

7. Anordnung nach einem der Ansprüche 1 bis 6, wobei die verformbare Verbindung Haltelaschen zwischen der Verglasung und dem Gehäuse aufweist, wobei diese Laschen dazu bestimmt sind, nach Befestigung des Gehäuses an der Struktur des Fahrzeugs zerbrochen zu werden.
